# EUROPÄISCHE PATENTSCHRIFT

(11) **EP 2 473 355 B1**
(45) Veröffentlichungstag und Bekanntmachung des Hinweises auf die Patenterteilung: **16.10.2013**
(21) Anmeldenummer: 10720440.6
(22) Anmeldetag: 31.05.2010
(51) Int. Cl.: B41M 3/14, B42D 15/00, B42D 15/10, G02B 6/122, G07D 7/04, G06K 19/06

(54) **SICHERHEITSMERKMAL UND VERFAHREN ZUR HERSTELLUNG EINES SICHERHEITSMERKMALS**
SECURITY FEATURE AND METHOD FOR PRODUCING A SECURITY FEATURE
MARQUE DE SÉCURITÉ ET PROCÉDÉ DE RÉALISATION D'UNE MARQUE DE SÉCURITÉ

(30) Priorität: 10.06.2009 DE 102009025019
(43) Veröffentlichungstag der Anmeldung: 11.07.2012
(73) Patentinhaber: Giesecke & Devrient GmbH, 81677 München (DE)
(72) Erfinder: KECHT, Johann, 81677 München (DE); STEINLEIN, Stephan, 80538 München (DE)
(86) Internationale Anmeldenummer: PCT/EP2010/057555
(87) Internationale Veröffentlichungsnummer: WO 2010/142553

(56) Entgegenhaltungen:
- EP-A2- 0 702 326
- US-A1- 2009 039 644
- Ge et al.: "Self-assembly and field-responsive optical diffractions of superparamagnetic colloids" Langmuir 2008 Bd. 24, 13. Februar 2008 (2008-02-13), Seiten 3671-3680, XP002590764 Gefunden im Internet: URL:http://pubs.acs.org/doi/abs/10.1021/la 7039493 in der Anmeldung erwähnt
- Xu et al.: "Synthesis and Utilization of Monodisperse Superparamagnetic Colloidal Particles for Magnetically Controllable Photonic Crystals" Chemical Materials 2002 Bd. 14, 29. November 2001 (2001-11-29), Seiten 1249-1256, XP002590765 Gefunden im Internet: URL:http://pubs.acs.org/doi/abs/10.1021/cm 010811h in der Anmeldung erwähnt

## Beschreibung

Die Erfindung betrifft ein Sicherheitsmerkmal und ein Verfahren zur Herstellung eines Sicherheitsmerkmals. Derartige Sicherheitsmerkmale werden zur Absicherung von Wertdokumenten eingesetzt, insbesondere zur Echtheitssicherung der Wertdokumente.

Zur Absicherung von Wertdokumenten werden diese mit Sicherheitsmerkmalen und/ oder mit Sicherheitsmerkmale aufweisenden Sicherheitselementen ausgestattet, um eine Überprüfung der Echtheit des Wertdokuments zu ermöglichen. Die Sicherheitsmerkmale und Sicherheitselemente dienen zum Schutz vor unerlaubter Reproduktion der Wertdokumente. Als Sicherheitselemente werden beispielsweise Sicherheitsfäden oder Folienelemente eingesetzt, die mit einem Wertdokument verbunden werden. Die Sicherheitsmerkmale können mit dem Substrat des Sicherheitselements oder mit dem Substrat des Wertdokuments selbst verbunden werden.

Aus dem Stand der Technik sind Sicherheitselemente bekannt, deren optische Erscheinung in Abhängigkeit von externen Stimuli gezielt veränderbar ist. Wertdokumente werden beispielsweise mit Mikrokapseln versehen, in denen magnetische Partikel enthalten sind, die durch ein angelegtes Magnetfeld manipulierbar sind. Durch das angelegte Magnetfeld kann die Lage oder Ausrichtung der magnetischen Partikel in der Mikrokapsel so beeinflusst werden, dass die Mikrokapseln zwischen einem für einfallendes Licht durchlässigen und einem für einfallendes Licht undurchlässigen Zustand hin- und hergeschaltet werden können. Durch das externe Magnetfeld lässt sich bei diesem Sicherheitsmerkmal daher lediglich eine Veränderung der Transparenz des Sicherheitsmerkmals erreichen.

US 2009/039 644A1 oder EP 702 326 A2 offenbart ein Sicherheitsmerkmal gemäß dem Oberbegriff von Anspruch 1.

Eine Aufgabe der vorliegenden Erfindung ist es daher, ein durch ein Magnetfeld beeinflussbares Sicherheitsmerkmal anzugeben, dessen optische Erscheinung eine größere Variabilität aufweist.

Diese Aufgabe wird durch die Gegenstände der unabhängigen Ansprüche gelöst. In davon abhängigen Ansprüchen sind vorteilhafte Weiterbildungen und Ausgestaltungen der Erfindung angegeben.

Wissenschaftliche Untersuchungen haben gezeigt, dass sich bestimmte magnetische Partikel innerhalb eines flüssigen Mediums durch Anlegen eines Magnetfelds unter bestimmten Bedingungen regelmäßig anordnen lassen (vgl. Ge et al., Langmuir 2008, 24, 3671-3680; Xu et al., Chemical Materials 2002, 14, 1249-1256; beide Artikel publiziert durch die American Chemical Society). Zwischen den einzelnen magnetischen Partikeln wirken verschiedene Kräfte, insbesondere magnetische und elektrostatische Kräfte, durch die sich die Partikel in dem flüssigen Medium so verschieben, dass sie eine regelmäßige Struktur ausbilden. Die regelmäßige Struktur liegt zumindest im Rahmen einer Nahordnung der magnetischen Partikel vor, es kann sich aber auch eine Fernordnung ausbilden. Durch Anlegen eines Magnetfelds lassen sich die Kräfte zwischen den magnetischen Partikeln und daher auch die Anordnung der magnetischen Partikel in dem flüssigen Medium beeinflussen. Die magnetischen Partikel lassen sich in dem flüssigen Medium unter bestimmten Bedingungen so anordnen, dass sie eine Vielzahl von Netzebenen bilden, die zu einer Lichtbeugung führen. Durch die regelmäßige Struktur der magnetischen Partikel kann eine Beugung einfallenden sichtbaren Lichts erreicht werden.

Magnetische Partikel, die eine derartige lichtbeugende regelmäßige Struktur ausbilden können, werden erfindungsgemäß als Bestandteil eines Sicherheitsmerkmals zur Absicherung von Wertdokumenten eingesetzt. Das erfindungsgemäße Sicherheitsmerkmal umfasst eine Vielzahl von Mikrokapseln, die jeweils eine Wand aufweisen und in denen jeweils ein flüssiges Medium enthalten ist, in dem mehrere magnetische Partikel verteilt sind. Die magnetischen Partikel sind in dem flüssigen Medium beweglich und ihre Anordnung innerhalb der Mikrokapsel ist durch Einwirkung eines Magnetfelds veränderbar. Die magnetischen Partikel sind außerdem dazu ausgebildet, sich innerhalb der Mikrokapsel so anzuordnen, dass sie eine lichtbeugende regelmäßige Struktur bilden, insbesondere durch Einwirkung eines Magnetfelds.

Im Vergleich zu einem direkten Einbringen des mit magnetischen Partikeln versehenen, flüssigen Mediums in eine andere Flüssigkeit, z.B. als Emulsion in einen flüssigen Polymervorläufer, weist das Einbringen des mit magnetischen Partikeln versehenen, flüssigen Mediums mit Hilfe von Mikrokapseln verschiedene Vorteile auf: Aufgrund des Einschlusses des mit magnetischen Partikeln versehenen flüssigen Mediums in der Mikrokapsel ist erstens die Größe der eingebrachten "Flüssigkeitströpfchen" kontrollierbar. Beim direkten Einbringen des flüssigen Mediums in die andere Flüssigkeit ist die Größe der "Flüssigkeitströpfchen" dagegen von den Einbringungsbedingungen, wie z.B. von der Rührstärke abhängig. Zweitens wird durch die schützende und abgrenzende Funktion der Mikrokapselhülle ermöglicht, das in der Mikrokapsel enthaltene, mit magnetischen Partikeln versehene flüssige Medium problemlos in einer anderen flüssigen oder viskosen Phase zu dispergieren, ohne dass sich die beiden flüssigen Medien durchmischen. Im Gegensatz zu den oben erwähnten flüssig-flüssig-Dispersionen ist es also nicht erforderlich, auf eine Kompatibilität der beiden flüssigen Medien zu achten.

Durch die Anordnung der magnetischen Partikel in den Mikrokapseln bildet sich eine lichtbeugende regelmäßige Struktur aus, die dazu geeignet ist, eine Lichtbeugung, insbesondere eine Bragg-Beugung des Lichts hervorzurufen, das auf das Sicherheitsmerkmal einfällt. Insbesondere kann die lichtbeugende regelmäßige Struktur der magnetischen Partikel zumindest bereichsweise als photonischer Kristall ausgebildet sein. Durch die Bragg-Beugung wird ein Teil des einfallenden Lichts an den Netzebenen der lichtbeugenden regelmäßigen Struktur zurückgebeugt. Der Anteil des einfallenden Lichts, der von der lichtbeugenden regelmäßigen Struktur unter Bragg-Beugung gebeugt wird, wird im Folgenden kurz als reflektiertes Licht bezeichnet.

Die lichtbeugende Wirkung der lichtbeugenden regelmäßigen Struktur ist durch Einwirkung eines Magnetfelds veränderbar. Durch eine Änderung eines angelegten Magnetfelds, z.B. der Magnetfeldstärke, der Magnetfeldrichtung oder des Magnetfeldgradienten, kann gezielt eine Änderung der lichtbeugenden Wirkung der lichtbeugenden regelmäßigen Struktur erreicht werden. In Abhängigkeit eines angelegten Magnetfelds lässt sich der Abstand der Netzebenen der magnetischen Partikel verändern und damit auch die reflektierte Wellenlänge und die von außen beobachtbare Farbe. Die Wellenlängen des einfallenden und des gebeugten Lichts können dabei im sichtbaren und/ oder im infraroten und/ oder im ultravioletten Spektralbereich liegen. In Abhängigkeit des Einfallswinkels des Lichts und des Magnetfelds wird durch die Bragg-Beugung unter bestimmten Beobachtungswinkeln Licht im sichtbaren, im infraroten oder im ultravioletten Spektralbereich reflektiert. Das optische Erscheinungsbild des Sicherheitsmerkmals weist daher eine große Variabilität auf.

Das Sicherheitsmerkmal ist für eine visuelle Beobachtung durch Personen oder für eine maschinelle Beobachtung mittels eines Detektors einsetzbar. Zur visuellen Prüfung des Sicherheitsmerkmals kann vorgesehen sein, dass unter vorgegebenen Beobachtungswinkeln bestimmte Farben im Sichtbaren beobachtbar sind. Zur maschinellen Prüfung eines derartigen Sicherheitsmerkmals können auch Wellenlängen im Infraroten oder im Ultravioletten detektiert werden.

Die lichtbeugende regelmäßige Struktur kann durch das angelegte Magnetfeld entweder gezielt erzeugt oder gezielt verändert werden. Beispielsweise kann das Sicherheitsmerkmal so beschaffen sein, dass die magnetischen Partikel erst durch Einwirkung eines Magnetfelds eine lichtbeugende regelmäβige Struktur bilden. Wenn dagegen kein Magnetfeld auf dieses Sicherheitsmerkmal einwirkt, ist die Anordnung der magnetischen Partikel zufällig und sie bilden keine lichtbeugende regelmäßige Struktur. Erst durch die Einwirkung eines Magnetfelds werden die magnetischen Partikel in dem flüssigen Medium so angeordnet, dass sie zumindest bereichsweise eine lichtbeugende regelmäßige Struktur, insbesondere eine photonische Kristallstruktur bilden. Bei Ausschalten des Magnetfelds am Ort des Sicherheitsmerkmals oder beim Entfernen des Sicherheitsmerkmals aus dem Magnetfeld, erfolgt ein Übergang von der lichtbeugenden regelmäßigen Struktur zurück zu einer zufälligen Verteilung der magnetischen Partikel. Dies kann plötzlich oder mit einer zeitlichen Verzögerung erfolgen. Die charakteristische Zeit zur Rückkehr zur zufälligen Verteilung hängt unter anderem von der Viskosität des flüssigen Mediums ab. Die charakteristische Zeit, sowohl für den Anordnungsvorgang der regelmäßigen Struktur aus der zufälligen Verteilung der magnetischen Partikel als auch für die Rückkehr zur zufälligen Verteilung, kann gezielt durch die Art des flüssigen Mediums oder bestimmte Zusätze zu dem flüssigen Medium eingestellt werden.

Alternativ kann das Sicherheitsmerkmal aber auch so beschaffen sein, dass eine lichtbeugende regelmäßige Struktur auch ohne Einwirkung eines Magnetfelds existiert. Wenn kein Magnetfeld auf das Sicherheitsmerkmal einwirkt, bilden die magnetischen Partikel eine erste lichtbeugende regelmäßige Struktur. Durch Einwirkung eines Magnetfelds kann diese erste lichtbeugende regelmäßige Struktur modifiziert werden und z.B. in eine zweite lichtbeugende regelmäßige Struktur überführt werden. Ob eine lichtbeugende regelmäßige Struktur auch ohne Einwirkung eines Magnetfelds existiert oder sich erst bei angelegtem Magnetfeld ausbilden kann, hängt von den Eigenschaften der magnetischen Partikel und von der Art des flüssigen Mediums ab.

Die Erfindung betrifft auch ein Verfahren zur Herstellung eines Sicherheitsmerkmals, bei dem ein flüssiges Medium, in dem mehrere magnetische Partikel verteilt sind, in eine Vielzahl von Mikrokapseln verkapselt wird. Die magnetischen Partikel sind in dem flüssigen Medium beweglich und die Anordnung der magnetischen Partikel innerhalb der Mikrokapseln ist durch Einwirkung eines Magnetfelds veränderbar. Die magnetischen Partikel sind dazu ausgebildet sind, sich innerhalb der Mikrokapseln so anzuordnen, dass sie eine lichtbeugende regelmäßige Struktur bilden.

Zur Herstellung der Mikrokapseln des erfindungsgemäßen Sicherheitsmerkmals wird auf die aus dem Stand der Technik bekannten Verfahren zur Mikroverkapselung von Flüssigkeiten zurückgegriffen, beispielsweise auf Koazervation oder Grenzflächenpolymerisation. Als Material für die bei der Mikroverkapselung gebildete Hülle der Mikrokapsel eignen sich z.B. synthetische oder natürliche Polymere, Polyurethane, Polyharnstoffe, Melaminharze, Melamin/Formaldehyd, Proteine, Gelatine, modifizierte Gelatine, Polylactate, Polyacrylate (z.B. PMMA), Silikone, oder anorganische Oxide (z.B. Silikate, Titanoxide, Hafniumoxide oder Eisenoxide).

Um aus den Mikrokapseln ein stabiles Sicherheitsmerkmal herzustellen, das zur Absicherung von Wertdokumenten verwendbar ist, werden die Mikrokapseln mit einer Wand umgeben. Erfindungsgemäß werden diese Mikrokapseln durch die Wand, mit der sie umgeben sind, so stabilisiert, dass sie zur Absicherung von Wertdokumenten eingesetzt werden können. Die Stabilisierung der Mikrokapseln erlaubt, dass das die Mikrokapseln enthaltende Sicherheitsmerkmal stabil ist gegenüber den mechanischen Beanspruchungen, die bei der Benutzung der Wertdokumente üblicherweise auftreten.

Das Umgeben der Mikrokapseln mit der Wand wird vorzugsweise durchgeführt, bevor das Sicherheitsmerkmal mit dem abzusichernden Wertdokument verbunden wird, insbesondere vor dem Aufbringen oder Einbringen des Sicherheitsmerkmals auf bzw. in das abzusichernde Wertdokument. Die auf diese Weise hergestellten, mit der stabilisierenden Wand umgebenen Mikrokapseln werden anschließend mit dem Wertdokument verbunden. Diese Stabilisierung erlaubt, dass die mit der stabilisierenden Wand umgebenen Mikrokapseln mit dem Wertdokument auch durch solche Aufbringoder Einbringverfahren verbunden werden können, die eine starke mechanische Beanspruchung der Mikrokapseln mit sich bringen. Beispielsweise sind die Mikrokapseln durch ihre Wand so stabilisiert, dass sie durch ein Druckverfahren auf das Wertdokument aufgebracht werden können. In einem Ausführungsbeispiel werden die Mikrokapseln bereits beim Verkapselungsvorgang selbst mit der stabilisierenden Wand umgeben, so dass die Wand durch die ursprüngliche Hülle der Mikrokapsel gebildet wird. In einem anderen Ausführungsbeispiel wird auf die ursprüngliche Hülle der Mikrokapsel eine Schutzschicht aufgebracht, die zusammen mit der Hülle die die Mikrokapsel umgebende stabilisierende Wand bildet.

Eine erhöhte Stabilität der Mikrokapseln kann durch verschiedene Maßnahmen erreicht werden. Um diese Stabilität der Mikrokapseln zu erreichen, können die Mikrokapseln zum einen mit einer Wand großer Wanddicke ausgestattet sein. Die Wand der Mikrokapsel weist vorzugsweise eine Wanddicke von mindestens 10%, insbesondere von mindestens 20% des größten Durchmessers der Mikrokapsel auf. Bevorzugt beträgt die Wanddicke an jeder Stelle der Wand mindestens 10%, insbesondere mindestens 20%, des größten Durchmessers der Mikrokapsel. Vorzugsweise weisen die Mikrokapseln Wanddicken von mindestens 2µm auf, insbesondere von mindestens 4µm. Bevorzugt beträgt die Wanddicke an jeder Stelle der Wand mindestens 2µm, insbesondere mindestens 4µm. Um die Stabilität der Mikrokapseln zu erhöhen, können, zusätzlich oder alternativ zur großen Wanddicke, besonders geringe Mikrokapsel-Durchmesser gewählt werden. Kleinere Mikrokapseln sind beispielsweise weniger anfällig gegenüber einem Knicken oder Falten der Wertdokumente, in die sie ein- oder auf die sie aufgebracht sind. Vorzugsweise weisen die Mikrokapseln daher einen Durchmesser von höchstens 20µm auf, insbesondere von höchstens 10µm. Bevorzugt beträgt der Durchmesser der Mikrokapsel in jeder Raumrichtung höchstens 20µm, insbesondere höchstens 10µm.

In einem Ausführungsbeispiel besteht die Wand der Mikrokapseln jeweils aus der Hülle, die bei der Herstellung der Mikrokapsel erzeugt wird und die im Folgenden als ursprüngliche Hülle bezeichnet wird. In diesem Ausführungsbeispiel wird die Wand der Mikrokapsel die für die erhöhte Stabilität der Mikrokapsel sorgt, allein durch diese ursprüngliche Hülle gebildet.

In einem anderen Ausführungsbeispiel besteht die Wand der Mikrokapseln jeweils aus der (bei der Herstellung der Mikrokapsel erzeugten) ursprünglichen Hülle und aus einer Schutzschicht, von der diese ursprüngliche Hülle vollständig umgeben ist. Die Schutzschicht ist dabei unmittelbar auf der ursprünglichen Hülle der Mikrokapsel angeordnet.

In einer ersten Variante dieses Ausführungsbeispiels weist jede Mikrokapsel ihre ursprüngliche Hülle und eine individuelle Schutzschicht auf, die individuell auf die Hülle der Mikrokapsel aufgebracht ist. Der Begriff "individuell auf die Mikrokapsel aufgebracht" bedeutet, dass die Mikrokapsel individuell mit Schutzschichtmaterial umgeben wird, wobei das Schutzschichtmaterial der verschiedenen Mikrokapseln nicht miteinander verbunden ist. Die individuelle Schutzschicht wird also nicht durch ein viele Mikrokapseln umgebendes Schutzschichtmaterial bereit gestellt. Diese individuelle Schutzschicht bildet eine zusätzliche Umhüllung der jeweiligen Mikrokapsel. Zusammen mit der ursprünglichen Hülle bildet die individuelle Schutzschicht die Wand der Mikrokapsel. Die Schutzschicht kann dabei aus einer oder aus mehreren Einzelschichten bestehen. Die Wand besteht bei dieser Variante also aus mindestens zwei verschiedenen Schichten, die unmittelbar aneinander grenzen. Vorzugsweise weist die individuelle Schutzschicht Polymer oder Silika oder eine Mischung aus Polymer und Silika auf.

In einer zweiten Variante dieses Ausführungsbeispiels wird die Schutzschicht durch eine Festkörperschicht bereit gestellt, in die mehrere Mikrokapseln eingebettet sind. Zusammen mit der jeweiligen ursprünglichen Hülle bildet die Festkörperschicht, insbesondere der die ursprüngliche Hülle unmittelbare umgebende Abschnitt der Festkörperschicht, die Wand der jeweiligen Mikrokapsel. Die Festkörperschicht ist beispielsweise als Polymerschicht ausgebildet.

Die Erfindung betrifft außerdem ein Sicherheitselement, das ein erfindungsgemäßes Sicherheitsmerkmal aufweist. Das Sicherheitselement ist dazu bestimmt, auf ein Wertdokument aufgebracht oder in ein Wertdokument eingebracht zu werden. Das Sicherheitsmerkmal ist z.B. ein Sicherheitsstreifen, ein Sicherheitsfaden, ein Sicherheitsband oder ein Transferelement zum Aufbringen auf ein Wertdokument. Ferner kann das Sicherheitselement eine Druckfarbe sein, die auf das Wertdokument aufgebracht wird. Das Sicherheitselement kann insbesondere in Form eines direkt auf das Wertdokument aufgedruckten Merkmalsbereichs ausgebildet werden. Außerdem betrifft die Erfindung ein Sicherheitspapier und ein Wertdokument, in das ein erfindungsgemäßes Sicherheitsmerkmal auf- oder eingebracht ist und/ oder in das ein derartiges Sicherheitselement aufweist. Bei den abzusichernden Wertdokumenten handelt es sich beispielsweise um Banknoten, Schecks, Ausweise, Pässe, Kreditkarten, Scheckkarten, Tickets, Gutscheine, Aktien, Urkunden, Wertmarken etc..

Ein erfindungsgemäßes Sicherheitsmerkmal weist z.B. eine Festkörperschicht mit darin eingebetteten Mikrokapseln auf, wobei die Festkörperschicht als Bestandteil eines abzusichernden Wertdokuments vorgesehen ist. Die Festkörperschicht, in die die Mikrokapseln eingebettet werden, kann z.B. das Substrat eines abzusichernden Wertdokuments sein, insbesondere ein Kunststoffsubstrat, z.B. Polymersubstrat, und/ oder ein Papiersubstrat. Die Festkörperschicht kann aber auch durch eine Kunststofffolie gebildet werden, die dazu bestimmt ist, auf ein abzusicherndes Wertdokument aufgebracht oder in ein abzusicherndes Wertdokument eingebracht zu werden. Beispielsweise kann die Festkörperschicht Teil eines Transferelements, eines Sicherheitsfadens, eines Patches oder eines Hologramms sein. Alternativ kann die Festkörperschicht aber auch durch eine Blanchette, eine Melierfaser oder einen Festkörperpartikel gebildet sein, der oder die auf das abzusichernde Wertdokument aufgebracht oder in das abzusichernde Wertdokument eingebracht wird.

Alternativ wird ein Sicherheitsmerkmal, das erfindungsgemäße Mikrokapseln enthält, auf die Oberfläche des abzusichernden Wertdokuments aufgebracht. Dazu werden die Mikrokapseln zunächst in eine Flüssigkeit eingebracht, die anschließend auf das Wertdokument aufgebracht und ausgehärtet wird. Als Flüssigkeit, mit der die Mikrokapseln auf das Wertdokument aufgebracht werden, eignen sich insbesondere hitze- oder UV-härtbare Lacke, Bindemittel, polymerisierbare Monomerlösungen oder trocknende Dispersionen, wie z.B. Druckfarben, oder andere aushärtbare Flüssigkeiten mit geeigneten Schmelzpunkten. Nach Aushärten der Flüssigkeit, in der die Mikrokapseln eingebettet sind, z.B. durch UV-Bestrahlung, Eintrocknen, Temperaturänderung, bildet das ausgehärtete Material eine zusätzliche Schutzschicht für die Mikrokapseln.

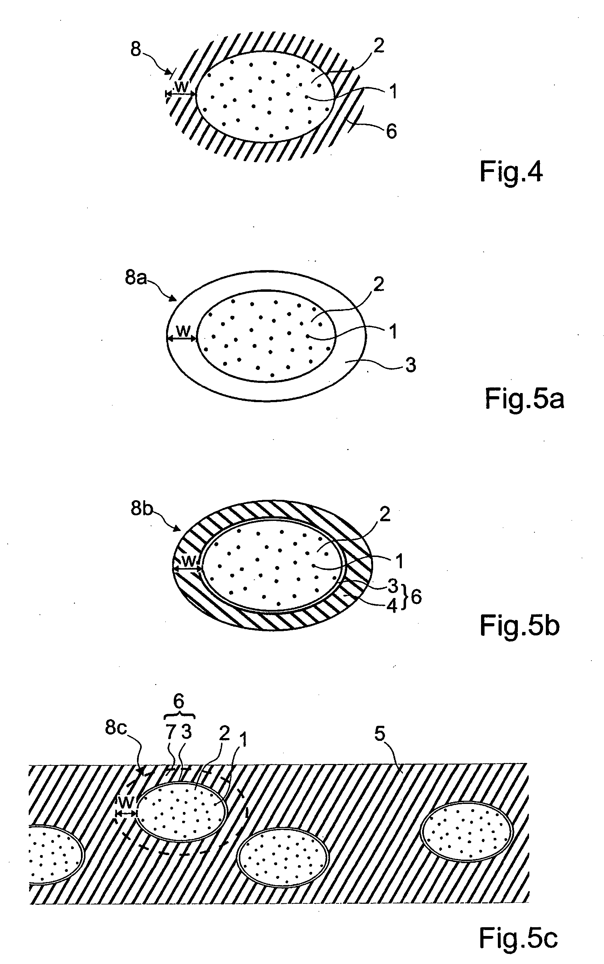

Bevorzugt werden die Mikrokapseln in eine Druckfarbe oder in ein Bindemittel für eine Druckfarbe eingebracht. Die Mischung aus der Druckfarbe und den Mikrokapseln, sowie optional weiteren Stoffen, wird anschließend im Rahmen eines Druckverfahrens auf ein Substrat aufgebracht. Das auf diese Weise bedruckte Substrat kann das Substrat des Wertdokuments selbst sein oder ein Sicherheitselement, das dazu ausgebildet ist, auf das Wertdokument auf oder in das Wertdokument eingebracht zu werden. Als Druckverfahren eignen sich z.B. Siebdruck, Stich- oder Rastertiefdruck oder Flexodruck. Dem Bindemittel bzw. der Druckfarbe können außer den Mikrokapseln außerdem Pigmente oder andere optisch wirksame Stoffe beigemischt sein. Je nach mechanischer Beanspruchung, der die Mikrokapseln bei dem Druckverfahren unterworfen werden, kann es erforderlich sein, dafür Mikrokapseln mit einer individuell aufgebrachten stabilisierenden Wand zu verwenden (vgl. Mikrokapseln 8a und 8b in den Figuren 5a und 5b). Aufgrund ihrer individuell aufgebrachten Wand weisen diese Mikrokapseln, auch ohne Einbettung in eine Festkörperschicht, eine erhöhte Stabilität auf. Für das Aufbringen im Rahmen eines Druckverfahrens werden daher bevorzugt die Mikrokapseln mit individuell aufgebrachter stabilisierender Wand verwendet. Der Begriff "individuell auf die Mikrokapsel aufgebracht" bedeutet, dass die Mikrokapsel individuell mit der Wandmaterial umgeben wird, wobei das Wandmaterial der verschiedenen Mikrokapseln nicht miteinander verbunden ist.

Zur Bildung der lichtbeugenden regelmäßigen Struktur können magnetische Partikel verschiedener Formen verwendet werden. Zum Beispiel sind die magnetischen Partikel als Kugeln, Zylinder, Scheiben, Plättchen, Nadeln, Prismen oder als unregelmäßige Form ausgebildet. Die magnetischen Partikel weisen z.B. polykristallines magnetisches Material auf.

Die magnetischen Partikel sind bevorzugt als superparamagnetische Partikel ausgebildet. Im Gegensatz zu ferro- oder ferrimagnetischen Partikeln weisen diese eine verschwindende remanente Magnetisierung auf. Werden diese superparamagnetischen Partikel einem Magnetfeld ausgesetzt, so werden diese durch Einwirkung des Magnetfelds magnetisiert. Bei Entfernung des Magnetfelds verschwindet die Magnetisierung der superparamagnetischen Partikel wieder vollständig. Für die Anwendung als Sicherheitsmerkmal kann die verschwindende remanente Magnetisierung von Vorteil sein, da die Magnetisierung in diesem Fall vollständig reversibel ist und es damit vereinfacht wird, das Sicherheitsmerkmal gezielt von außen zu beeinflussen. Im Hinblick auf die Anwendung als Sicherheitsmerkmal ist das vollständige Verschwinden der Magnetisierung jedoch nicht unbedingt erforderlich. Alternativ können daher die für das Sicherheitsmerkmal eingesetzten magnetischen Partikel auch als ferro- oder ferrimagnetische Partikel ausgebildet sein, deren remanente Magnetisierung sehr gering ist. Insbesondere beträgt die remanente Magnetisierung der ferro- oder ferrimagnetischen Partikel höchstens 20% ihrer Sättigungsmagnetisierung, vorzugsweise höchstens 10%. In diesem Fall verschwindet die Magnetisierung der Partikel, sobald man sie aus dem Magnetfeld entfernt, zwar nicht vollständig, ist aber so gering, dass die Magnetisierung durch übliche Magnetfeldstärken gezielt beeinflussbar bleibt. Zur magnetischen Beeinflussung kann die Magnetisierung von ferro- oder ferrimagnetischen Partikeln durch ein entsprechend großes angelegtes Magnetfeld weiter erhöht werden, so dass auch hier eine gezielte Veränderung des Netzebenenabstands und damit der optischen Eigenschaften des Sicherheitsmerkmals möglich ist.

Werden als magnetische Partikel ferro- oder ferrimagnetische Partikel eingesetzt, so werden vorzugsweise Maßnahmen getroffen, um eine mögliche Verklumpung der ferro- oder ferrimagnetischen Partikel bei starken Magnetfeldern zu verhindern. Entweder werden die ferro- oder ferrimagnetischen Partikel bereits so gewählt, dass eine Verklumpung der Partikel verhindert wird. Diese Verklumpung kann z.B. durch Einstellung einer entsprechend starker elektrostatischer Abstoßung der ferro- oder ferrimagnetischen Partikel verhindert werden oder durch eine Beschichtung und/ oder Funktionalisierung der ferro- oder ferrimagnetischen Partikel, um durch sterische oder elektrostatische Kräfte eine entsprechend große Abstoßungskraft zwischen den magnetischen Partikeln zu erreichen. Die genannten Maßnahmen zur Verhinderung der Verklumpung können auch für superparamagnetische Partikel vorteilhaft eingesetzt werden.

Superparamagnetische Partikel sind üblicherweise nur unterhalb einer bestimmten Größe superparamagnetisch. Bei größerer Ausdehnung der einzelnen Partikel verschwinden die paramagnetischen Eigenschaften und die Partikel werden z.B. ferromagnetisch. Die magnetischen Partikel sollten jedoch möglichst groß sein, damit die magnetischen Kräfte zur Bildung der lichtbeugenden regelmäßigen Struktur ausreichen. Die erfindungsgemäß in der Mikrokapsel verteilten superparamagnetischen Partikel enthalten daher vorzugsweise jeweils mehrere superparamagnetische Nanopartikel. Beispielsweise werden die superparamagnetischen Partikel jeweils durch ein Agglomerat mehrerer aneinander liegender superparamagnetischer Nanopartikel gebildet. Die superparamagnetischen Nanopartikel können aber auch innerhalb des jeweiligen superparamagnetischen Partikels verteilt sein ohne aneinander zu liegen.

Die superparamagnetischen Partikeln, insbesondere die superparamagnetischen Nanopartikel, enthalten z.B. eines oder mehrere der folgenden Materialien: Eisenoxid, in insbesondere Fe₂O₃ oder Fe₃O₄ Magnetit, Maghemit oder auch Ferrite, insbesondere Verbindungen des Typs MFe₂O₄, wobei M ein zweiwertiges Kation oder eine Mischung mehrerer zweiwertiger Kationen ist, z.B. ZnFe₂O₄, CoFe₂O₄. Beispielsweise besteht jedes einzelne superparamagnetische Nanopartikel aus einem bestimmten magnetischen Material. Alternativ weist jedes einzelne superparamagnetische Nanopartikel eine Mischung zweier oder mehrerer magnetischer Materialien auf. Beispielsweise entsteht bei der Synthese von Fe₃O₄-Nanopartikeln üblicherweise eine beträchtliche Nebenphase aus Fe₂O₃, so dass hier natürlicherweise ein Gemisch aus zwei superparamagnetischen Materialien innerhalb derselben Nanopartikel vorliegt. Andererseits können zur Herstellung der Nanopartikel auch gezielt verschiedene superparamagnetische Materialien mit unterschiedlichen Eigenschaften kombiniert werden. Dadurch lassen sich gezielt Eigenschaften der resultierenden Partikel anpassen, z.B. deren Magnetisierbarkeit. Auf diese Weise können z.B. die eingesetzten Magnetfeldstärkenbereiche und die entsprechenden Wellenlängenbereiche des gebeugten Lichts gesteuert werden. Ferner können auch innerhalb eines superparamagnetischen Partikels verschiedenartige superparamagnetische Nanopartikel enthalten sein, die aus verschiedenen magnetischen Materialien gebildet sind.

Des Weiteren können die Eigenschaften der magnetischen Partikel auch durch eine Kombination eines magnetischen Stoffes mit einem nichtmagnetischen Stoff gezielt eingestellt werden. So ist z.B. der Einfluss eines Magnetfelds auf Partikel, die aus einer Mischung von Eisenoxid und eines inerten Füllstoffs bestehen, geringer als auf Partikel bestehend aus reinem Eisenoxid. Durch Mischung von magnetischen mit nicht-magnetischen Materialien kann daher die Magnetisierbarkeit der magnetischen Partikel gezielt reduziert werden.

Die innerhalb einer Mikrokapsel enthaltenen magnetischen Partikel können monodispers sein. Alternativ können aber innerhalb der Mikrokapseln auch gezielt magnetische Partikel unterschiedlicher Art enthalten sein. Beispielsweise kann es für die Anwendung als Sicherheitsmerkmal vorteilhaft sein, innerhalb der Mikrokapseln jeweils magnetische Partikel verschiedener Gröβe einzusetzen. Magnetische Partikel verschiedener Größe bilden ihre lichtbeugenden regelmäßigen Strukturen bei unterschiedlichen Magnetfeldstärken aus und bevorzugen unterschiedliche Netzebenenabstände. Im Vergleich zum Fall monodisperser magnetischer Partikel lässt sich daher, durch Einbringen magnetischer Partikel verschiedener Größe in die Mikrokapseln, der mit einem Sicherheitsmerkmal abdeckbare Wellenlängenbereich verbreitern. Alternativ kann das Sicherheitselement natürlich auch verschiedene Mikrokapsel-Arten aufweisen, in denen unterschiedliche, z.B. unterschiedlich große, magnetische Partikel enthalten sind.

Ob die magnetischen Partikel in dem flüssigen Medium eine lichtbeugende regelmäßige Struktur, insbesondere eine photonische Kristallstruktur, ausbilden können, hängt von den verschiedenen Kräften ab, die auf die magnetischen Partikel in dem flüssigen Medium wirken. Dazu gehören elektrostatische Kräfte, magnetische Kräfte und sterische Hinderungskräfte, die beispielsweise durch Solvatationshüllen der magnetischen Partikel zustande kommen. Wichtige Parameter, durch die die Anordnung der magnetischen Partikel beeinflusst werden kann, sind daher z.B. die Oberflächenladungen der Partikel, die Art des flüssigen Mediums, z.B. die Polarität des flüssigen Mediums, und die Art und Menge an magnetischem Material, die in den magnetischen Partikeln enthalten ist. Durch geeignete Wahl dieser Parameter kann die Bildung einer lichtbeugenden Struktur in dem flüssigen Medium begünstigt werden. Die Eigenschaften der lichtbeugenden Struktur, z.B. der Gittertyp der Struktur und/ oder der Netzebenenabstand, können durch Variation dieser Parameter variiert werden.

Die sterische Abstoßung kann durch Funktionalisierung der Partikeloberfläche mit geeigneten Gruppen eingestellt werden. Je nach Platzbedarf der Funktionalisierungsgruppen kann die sterische Abstoßung der magnetischen Partikel vergrößert oder verkleinert werden. Die magnetischen Kräfte zwischen den magnetischen Partikeln sind üblicherweise anziehend und können durch die Art und Menge an magnetischem Material pro magnetischem Partikel eingestellt werden. Die elektrostatischen Abstoßungskräfte sind z.B. durch Funktionalisierung der Partikeloberfläche einstellbar und/ oder durch Zusätze in dem flüssigen Medium, die die Bildung von Oberflächenladungen erleichtern.

Um eine lichtbeugende regelmäßige Struktur aus magnetischen Partikeln in einem flüssigen Medium auszubilden, ist es vorteilhaft, das flüssige Medium und die magnetischen Partikel aufeinander abzustimmen. Je nach der Art der magnetischen Partikel kann sich die lichtbeugende regelmäßige Struktur nur in bestimmten flüssigen Medien ausbilden, während in anderen flüssigen Medien z.B. keine ausreichende Dispersion der Partikel erfolgt oder die abstoßenden Kräfte zwischen den Partikeln nicht im richtigen Verhältnis zu den anziehenden Kräften stehen. Erfindungsgemäß werden daher für die Anwendung als Sicherheitsmerkmal solche magnetischen Partikeln und solche flüssigen Medien verwendet, die zueinander kompatibel sind. Beispielsweise werden in Abhängigkeit der Art der magnetischen Partikel solche flüssigen Medien ausgewählt, die zu diesen magnetischen Partikeln kompatibel sind.

Um die Kompatibilität zu erreichen und/ oder um die Kräfte zwischen den magnetischen Partikeln zu beeinflussen, können auch die magnetischen Partikel selbst modifiziert werden, z.B. durch Funktionalisierung der Partikeloberfläche. Die magnetischen Partikel werden dazu mit einem Beschichtungsmaterial beschichtet und anschließend mit geeigneten chemischen Gruppen funktionalisiert, um eine funktionalisierte Partikeloberfläche zu erhalten. Als Beschichtungsmaterial der magnetischen Partikel kann z.B. Silika oder Polymer eingesetzt werden. Ferner können als Beschichtungsmaterial auch folgende Materialien verwendet werden: anorganische Materialien (wie z.B. Siliziumdioxid, Titandioxid, Aluminiumoxid oder andere Metalloxide, Metallsulfide, Metallsulfate oder auch Metallsilikate), organische Materialien (z.B. Polymere, Stärke, Zucker) oder eine Kombination aus anorganischen und organischen Materialien (z.B. Organosilikate, Silikone, funktionalisierte Sol-Gel-Systeme). Die Funktionalisierung kann z.B. dadurch erfolgen, dass ladungstragende oder ladungsgenerierende Gruppen an der beschichteten Partikeloberfläche angebracht werden. Die beschichtete Oberfläche der magnetischen Partikel kann mit Hilfe organischer Moleküle, z.B. mit Hilfe eines Organosilans, funktionalisiert werden. Zur Funktionalisierung können zum Beispiel folgende Gruppen verwendet werden: Phenyle, Amine, Sulfonsäure, Carbonsäure, quaternäre Ammoniumgruppen, Aliphate, Aromate, Alkane, Ester, Thiole, Aldehyde, Alkohole, Ketone, Amide, Polyether, Ether, Zucker. In einem Ausführungsbeispiel werden die magnetischen Partikel durch ein Agglomerat mehrerer superparamagnetischer Nanopartikel gebildet. Die Beschichtung des Agglomerats erfolgt z.B. mit Silika und die Funktionalisierung mit einem oder mehreren Organosilanen, z.B. mit Trialkoxy- oder Trichloro-Organosilan.

Um die Dispersion der Partikel in dem flüssigen Medium zu verbessern, kann die Partikeloberfläche z.B. so funktionalisiert werden, dass sie eine große elektrische Oberflächenladung aufweist oder dass sie eine ausreichend große elektrische Polarität aufweist. In polaren flüssigen Medien kann die Dispersion durch Funktionalisierung der Partikeloberfläche mit polaren Gruppen verbessert werden, beispielsweise mit Hydroxy, Methoxy- oder Ethoxy-Gruppen. In unpolaren flüssigen Medien kann die Dispersion durch Funktionalisierung der Partikeloberfläche mit unpolarer Gruppen verbessert werden, beispielsweise mit Alkyl-, Phenyl- oder Benzyl-Gruppen. Je nach Art des flüssigen Mediums kann eine ausreichende Dispersion der Partikel aber auch ohne Funktionalisierung, erreicht werden, falls bereits die Partikeloberfläche, die bei der Herstellung der Partikel erzeugt wird, eine ausreichende Dispersion ermöglicht.

Durch die Funktionalisierung der Partikeloberfläche mit positiven oder negativen Ladungen können die ektrostatischen Abstoßungskräfte zwischen den Partikeln gezielt eingestellt oder verändert werden. Die gezielte Einstellung der der elektrostatischen Abstoßungskräfte kann dazu verwendet werden, die Bildung der lichtbeugenden regelmäßigen Struktur zu beeinflussen. Durch Änderung der Oberflächenladungen der Partikel kann die lichtbeugende Wirkung der lichtbeugenden regelmäßigen Struktur eingestellt werden. Beispielsweise lässt sich durch Änderung der Oberflächenladungen der Abstand der Netzebenen einstellen und damit die Farbe des Sicherheitsmerkmals, die unter einem bestimmten Beobachtungswinkel beobachtbar ist. Um die sterischen Abstoßungskräfte zwischen den Partikeln zu modifizieren, können die Partikel auch mit sterisch sehr anspruchsvollen Gruppen funktionalisiert werden, z.B. mit Polymerketten, insbesondere mit Polyethylenglykol. Auch durch die Modifizierung der sterischen Abstoßungskräfte lässt sich der Abstand der Netzebenen und damit die Farbe des Sicherheitsmerkmals beeinflussen.

Als flüssiges Medium zur Aufnahme der magnetischen Partikel und zur Verkapselung in Mikrokapseln, können z.B. verwendet werden:
- wässrige Lösungen: reines Wasser, Salzlösungen oder Mischungen aus Wasser und eines oder mehreren Alkoholen;
- polare Lösungsmittel: Alkanole, z.B. Ethanol, Isopropanol; Glyzerin, Glykol;
- unpolare Lösungsmittel: organische Lösungsmittel, z.B. Benzol, Toluol, Acetonitril, Hexan, Chloroform, Ether.

Das flüssige Medium kann auch zähflüssig ausgebildet sein, z.B. als viskoses Fluid oder als Gel, z.B. als Hydrogel oder Polymer. Das flüssige Medium kann aber auch Lack, Wachs, Öl oder Paraffin aufweisen.

Im Vergleich zu wässrigen flüssigen Medien sind in anderen polaren flüssigen Medien die elektrostatischen Abstoßungskräfte der magnetischen Partikel üblicherweise geringer. Für den Einsatz in polaren organischen Lösungsmitteln ist es daher vorteilhaft, die magnetischen Partikel so zu beschichten, dass eine Solvatationshülle um die Beschichtung gebildet wird, die eine sterische Abstoßung der magnetischen Partikel bewirkt bzw. die sterische Abstoßungskraft vergrößert. Beispielsweise können die magnetischen Partikel zu diesem Zweck mit Silika beschichtet werden. Eine Silikabeschichtung der magnetischen Partikel führt beispielsweise in Alkanolen zur Bildung einer dicken Solvatationshülle, die eine gegenseitige Abstoßungskraft der magnetischen Partikel bewirkt. Bei unpolaren flüssigen Medien sind die elektrostatischen Abstoßungskräfte der Partikel üblicherweise noch kleiner. Unpolaren flüssigen Medien werden daher vorzugsweise Additive zugesetzt sein, die die Bildung von Oberflächenladungen erleichtern.

Um die Eigenschaften des Sicherheitsmerkmals im Hinblick auf die Anwendung zur Absicherung von Wertdokumenten zu verbessern, können beispielsweise folgende Maßnahmen getroffen werden:
- Einbringen von Zusatzstoffen in das flüssige Medium, die die Haltbarkeit des Sicherheitsmerkmals erhöhen: In das flüssige Medium können zu diesem Zweck kolloidale Stabilisatoren, z.B. Tenside, eingebracht werden, die einer Agglomeration der magnetischen Partikel entgegen wirken. Alternativ oder zusätzlich können zur Verbesserung der Haltbarkeit des Sicherheitsmerkmals UV-Absorber, Radikalfänger oder Redoxstabilisatoren in das flüssige Medium eingebracht werden.
- Einbringen von Zusatzstoffen in das flüssige Medium, die die elektrostatische Abstoßung der magnetischen Partikel und damit die lichtbeugenden Eigenschaften der lichtbeugenden regelmäßigen Struktur beeinflussen. Derartige Zusatzstoffe sind z.B. Stoffe, die die Ionenkonzentration in dem flüssigen Medium beeinflussen, z.B. Salze, oder Stoffe, die den pH-Wert des flüssigen Mediums beeinflussen.
- Anpassung des Brechungsindex des flüssigen Mediums, um den Brechungsindexsprung zu den magnetischen Partikeln zu beeinflussen und/ oder um den Brechungsindexsprung zu demjenigen Bestandteil des Wertdokuments zu beeinflussen, in den die Mikrokapseln eingebracht werden: Vorzugsweise wird der Brechungsindexsprung zwischen dem flüssigen Medium und den magnetischen Partikeln möglichst groß gewählt, um eine hohe Intensität des gebeugten Lichts zu erzielen. Der Brechungsindexsprung zwischen dem flüssigen Medium und dem Wertdokument wird dagegen vorzugsweise möglichst gering gewählt, damit möglichst wenig einfallendes Licht an den Mikrokapseln gestreut wird. Ferner kann das flüssige Medium so gewählt werden, dass möglichst wenig Licht durch das flüssige Medium absorbiert wird.
- Einbringen von Farbstoffen in das flüssige Medium und/oder in die magnetischen Partikel, um das optische Erscheinungsbild des Sicherheitsmerkmals einzustellen, z.B. dessen Grundfarbe.
- Einbringen von Zusatzstoffen in das flüssige Medium, um die Viskosität des flüssigen Mediums einzustellen. Beispielsweise kann durch Erhöhung der Viskosität die Magnetfeldstärke erhöht werden, die mindestens erforderlich ist, um die lichtbeugende regelmäßige Struktur innerhalb einer bestimmten Zeitspanne auszubilden.

Nachfolgend wird die Erfindung beispielhaft anhand der folgenden Figuren erläutert.

Es zeigen:
- Figuren 1a-b: Prinzipdarstellung zur Verteilung der magnetischen Partikel in einem flüssigen Medium ohne angelegtes Magnetfeld (Fig. 1a) und bei angelegtem Magnetfeld (Fig. 1b),
- Figuren 2a-b: Zwei Beispiele für die in der Mikrokapsel enthaltenen magnetischen Partikel,
- Figuren 3a-b: Schematische Darstellung der regelmäßigen Strukturen, die die magnetischen Partikel aus Figur 2a bzw. 2b bei angelegtem Magnetfeld ausbilden,
- Figur 4: Mikrokapsel, die in flüssigem Medium dispergierte magnetische Partikel enthält, mit stabilisierender Wand,
- Figuren 5a-c: drei Ausführungsbeispiele der Mikrokapsel aus Figur 4 zur Ausbildung der stabilisierenden Wand.

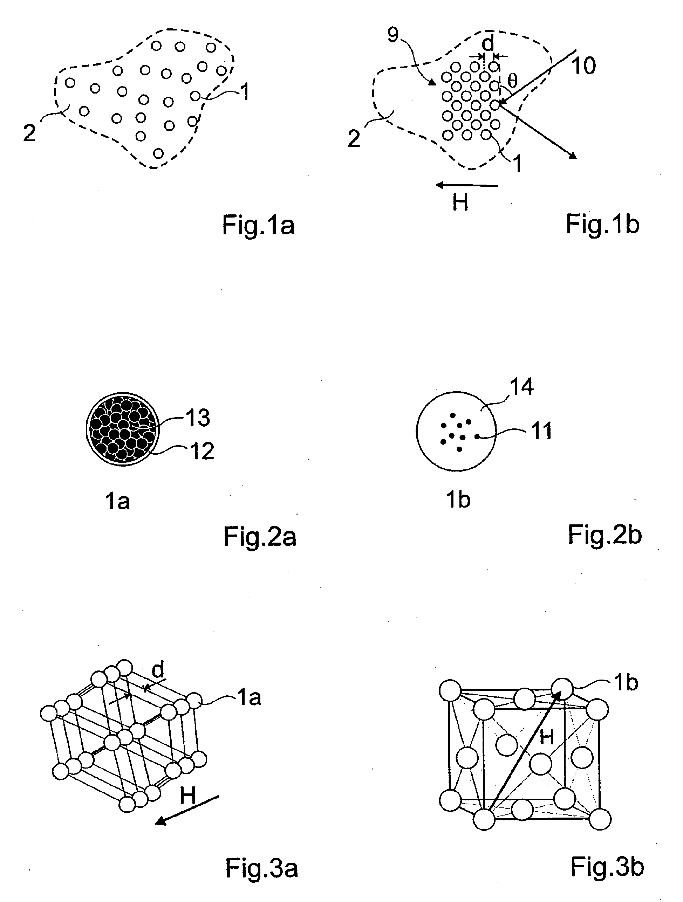

In Figur 1a ist ein flüssiges Medium 2 gezeigt, in dem eine Vielzahl magnetischer Partikel 1 suspendiert sind, beispielsweise superparamagnetische Partikel 1. Figur 1a zeigt die Verteilung der superparamagnetischen Partikel 1 in dem flüssigen Medium 2, wenn kein oder nur ein sehr schwaches Magnetfeld auf die Partikel 1 einwirkt. In diesem Fall sind die superparamagnetischen Partikel zufällig angeordnet. Unter Einwirkung eines Magnetfelds H führt die magnetische Wechselwirkung zwischen den Partikeln dazu, dass sich die superparamagnetischen Partikel 1 in einer regelmäßigen Struktur 9 anordnen. Diese ist schematisch in Figur 1b gezeigt. Zumindest bereichsweise bilden die superparamagnetischen Partikel 1 dabei einen photonischen Kristall aus.

Die superparamagnetischen Partikel 1 ordnen sich in diesem Beispiel so an, dass senkrecht zum Magnetfeld H orientierte Netzebenen ausgebildet werden, die voneinander durch einen Netzebenenabstand d entfernt sind. Diese Anordnung der superparamagnetischen Partikel 1 bildet eine lichtbeugende regelmäßige Struktur 9, die bestimmte Wellenlängen eines einfallenden Lichts 10 unter bestimmten Winkeln reflektiert. Der Zusammenhang zwischen reflektierter Lichtwellenlänge λ, Netzebenenabstand d, Brechungsindex des flüssigen Mediums n und Einfallswinkel des Lichts θ wird durch die Bragg-Gleichung λ = 2nd sinθ beschrieben. Bei angelegtem Magnetfeld H lassen sich daher unter bestimmten Winkeln bestimmte Farben beobachten. Der Netzebenenabstand d lässt sich durch Änderung des Magnetfelds in einem bestimmten Bereich variieren. In Abhängigkeit des angelegten Magnetfelds H lässt sich daher die von den Netzebenen reflektierte Wellenlänge und damit die unter einem bestimmten Winkel beobachtbare Farbe des Sicherheitsmerkmals gezielt variieren.

Der Netzebenenabstand d beträgt zwischen 50nm und 1000nm. In Abhängigkeit des Brechungsindex des verwendeten flüssigen Mediums und in Abhängigkeit des angelegten Magnetfelds, reflektiert das Sicherheitsmerkmal unter bestimmten Einfalls- und Beobachtungswinkeln bestimmte Wellenlängen im sichtbaren, im infraroten oder im ultravioletten Spektralbereich.

In den Figuren 2a und 3a ist ein Ausführungsbeispiel gezeigt, bei dem die superparamagnetischen Partikel 1a des Sicherheitsmerkmals durch Agglomerate einer Vielzahl von superparamagnetischen Eisenoxid-Nanopartikeln 13 gebildet sind. Diese Agglomerate weisen z.B. einen Durchmesser der Größenordnung 100 nm auf und bestehen aus Eisenoxid-Nanopartikeln einer Größe von 1-10 nm. Die Agglomerate sind in diesem Beispiel jeweils mit einem Beschichtungsmaterial 12 beschichtet, z.B. mit Silika, welches mit Hilfe von Organosilan funktionalisiert ist. Durch Zusammenwirken der magnetischen, elektrostatischen und sterischen Kräfte ordnen sich die magnetischen Partikel 1a in einem flüssigen Medium unter Einwirkung eines Magnetfelds H zu einer lichtbeugenden hexagonalen Struktur an, vgl. Figur 3a. Bei diesem Beispiel bilden sich Ketten aus superparamagnetischen Partikeln 1a, welche entlang des Magnetfelds H orientiert sind. Der Netzebenenabstand d beträgt dabei etwa 100nm-500nm. Durch Änderung der Magnetfeldstärke kann eine Änderung der Beugungsbedingungen realisiert werden. Der Abstand der Ketten untereinander ändert sich hingegen nicht merklich mit der Magnetfeldstärke. Der Farbeindruck des reflektierten Lichts bei verschiedenen Netzebenenabständen d bestimmt sich durch die oben angegebene Bragg-Gleichung. Demzufolge ergibt sich unter einem Beobachtungswinkel parallel zum Magnetfeldvektor (θ=90°) und unter Annahme einer mittleren Brechzahl von 1,33 ein Farbeindruck von λ = 2,66 · *d*, also z.B. reflektiertes Licht mit einer Wellenlänge von etwa 532 nm bei einem Netzebenenabstand d=200 nm.

In den Figuren 2b und 3b ist ein weiteres Ausführungsbeispiel gezeigt, bei dem die superparamagnetischen Partikel 1b aus Polymerpartikel 14 bestehen, in die mehrere superparamagnetische Nanopartikel 11 eingebettet sind. Die Polymerpartikel 1b können z.B. als Polystyrol-Partikel ausgebildet sein. Die superparamagnetischen Nanopartikel 14 bestehen z.B. aus Eisenoxid und haben einer Größe von 2nm-10nm. Unter Einwirkung eines Magnetfelds bilden die superparamagnetischen Partikel 1b in einem flüssigen Medium eine lichtbeugende regelmäßige Struktur, in diesem Beispiel ein kubisch flächenzentriertes Raumgitter, vgl. Figur 3b. Die Magnetfeldrichtung weist dabei in Richtung der Raumdiagonalen der kubischen flächenzentrierten Elementarzelle. Durch Änderung der Magnetfeldstärke können die magnetischen Kräfte zwischen den superparamagnetischen Partikeln 1b verändert werden, so dass sich der Netzebenenabstand d und damit der Farbeindruck des aus diesen Partikeln 1b hergestellten Sicherheitsmerkmals gezielt einstellen lässt. Unter bestimmten Bedingungen, z.B. bei Verwendung von denionisiertem Wasser als flüssiges Medium und ausreichender Monodispersität der Partikel 1b, ordnen sich die superparamagnetischen Partikel 1b bereits ohne Magnetfeld durch Selbstorganisation zu einer lichtbeugenden, regelmäßigen Struktur an. Bei Einwirkung eines Magnetfelds kann sich die lichtbeugende, regelmäßige Struktur der superparamagnetischen Polymerpartikel auch in salzhaltigen Lösungen und polaren organischen Lösungsmitteln ausbilden. Die lichtbeugende Wirkung wird in diesem Beispiel durch die Bragg-Beugung an den (111)-Flächen des kubisch flächenzentrierten Kristalls erreicht. Der Netzebenenabstand liegt dabei z.B. im Bereich 100nm-200nm. Durch Änderung der Magnetfeldbedingungen kann der Netzebenenabstand benachbarter (111)-Flächen gezielt verändert werden, um die lichtbeugende Wirkung zu verändern, z.B. um unter einem bestimmten Beobachtungswinkel eine bestimmte Farbe beobachten zu können.

Zur Anwendung als Sicherheitsmerkmal werden die in einem flüssigen Medium dispergierten magnetischen Partikel 1 in Mikrokapseln 8 verkapselt. Als Materialien für die Hülle 3 der Mikrokapseln 8 eignen sich synthetische oder natürliche Polymere, z.B. Polyurethane, Polyharnstoffe, Melaminharze, Proteine, Gelatine oder Polylactate.

Figur 4 zeigt eine erfindungsgemäße Mikrokapsel 8, durch die ein flüssiges Medium 2 mit darin dispergierten magnetischen Partikeln 1 verkapselt ist. Der Durchmesser der Mikrokapsel 8 beträgt beispielsweise 10µm. Die Mikrokapsel 8 weist eine Wand 6 auf, deren Wanddicke w mit mindestens 2 µm besonders groß ist. Das Verhältnis aus Wanddicke w zum maximalen Durchmesser der Mikrokapsel beträgt in diesem Beispiel 20%. Um die Mikrokapseln mit einer Wand mit großer Wanddicke w zu versehen, können verschiedene Maßnahmen getroffen werden:
In Figur 5a ist ein Ausführungsbeispiel einer Mikrokapsel 8a gezeigt, deren ursprüngliche Hülle 3, die bei der Mikroverkapselung des flüssigen Mediums 2 mit den darin dispergierten magnetischen Partikeln 1 erzeugt wird, bereits die große Wanddicke w aufweist. Besonders geeignet sind dazu Verfahren zur Kapselbildung, bei denen das Wachstum der Hülle 3 gut kontrolliert werden kann, insbesondere Polymerisationsreaktionen, bei denen wachsende Polymerketten für den Aufbau der Hülle 3 verantwortlich sind. Die Reaktionsbedingungen werden dabei so gewählt, dass ein Wachstum der Polymerschicht auf eine möglichst große Dicke erreicht wird. Bei kontinuierlichen Beschichtungsreaktionen, in welchen die wachsende Schicht durch die allmähliche dosierte Zugabe von Komponenten aufgebaut wird, kann eine ausreichende Wanddicke durch eine entsprechende verlängerte Zudosierung erreicht werden.

Figur 5b zeigt ein weiteres Ausführungsbeispiel einer Mikrokapsel 8b, bei der die ursprüngliche, bei der Mikroverkapselung erzeugte Hülle 3 eine geringe Dicke aufweist. Auf die ursprüngliche Hülle 3 wird bei diesem Ausführungsbeispiel eine Schutzschicht 4 so aufgebracht, dass sie die ursprüngliche Hülle 3 vollständig umgibt. Die Wand 6 der Mikrokapsel 8b besteht daher aus der ursprünglichen Hülle 3 und der Schutzschicht 4. Die Schutzschicht 4 der Mikrokapsel 8b kann z.B. als Silka-Schutzschicht oder als Polymerschutzschicht oder als Hybrid-Schutzschicht ausgebildet sein, die sowohl Silika als auch Polymer sowie optional weitere Bestandteile aufweist.

Eine Silika-Schutzschicht 4 kann z.B. durch Ansäuern von Wasserglas hergestellt werden oder durch Hydrolyse von Tetraethylorthosilikat mit Ammoniak. Durch Verwenden von Silika als Bestandteil der Schutzschicht 4 kann eine große Härte der Mikrokapselwand 4 erzielt werden. Im Vergleich zu üblichen, für die Mikrokapselhülle 3 eingesetzten Materialien ergibt sich dadurch bei gleicher Dicke eine erhöhte Stabilität der Mikrokapsel 8b.

Eine Polymer-Schutzschicht 4 kann z.B. durch eine Polymerisation hergestellt werden, bei der Oberflächengruppen der bei der Herstellung der Mikrokapsel 8b erzeugten, ursprünglichen Mikrokapselhülle 3 als Starter- oder Ankergruppen verwendet werden. An der ursprünglichen Mikrokapselhülle 3 werden dabei weitere Polymerketten aufgewachsen, die - bei entsprechender Dicke - eine Schutzschicht 4 bilden. Durch Verwenden von Polymer als Bestandteil der Schutzschicht 4 kann eine hohe Elastizität der Wand der Mikrokapsel 8b erzielt werden.

Vorzugsweise wird auf die ursprüngliche Hülle 3 eine als Hybridschicht ausgebildete Schutzschicht 4 aufgebracht, die sowohl Silika als auch Polymer enthält. Durch eine Hybrid-Schutzschicht 4, die Silika und Polymer aufweist, lassen sich Mikrokapseln 8b herstellen, deren Wand 6 elastisch verformbar ist und zugleich eine erhöhte Stabilität aufweist. Zur Herstellung der Hybrid-Schutzschicht 4 wird z.B. Silika auf die ursprüngliche Hülle 3 aufgebracht und anschließend eine Funktionalisierung der Silika-Oberfläche durchgeführt, um Ankergruppen auf der Silika-Oberfläche auszubilden. Die Funktionalisierung kann z.B. mit Hilfe einer Silanverbindung, z.B. mit Hilfe von 3-(Methacryloxy)propyltrimethoxysilan erfolgen. Die Ausbildung des Polymers kann durch eine Radikalpolymerisation erreicht werden, bei der Polymer auf den silikabeschichteten Mikrokapseln 8b aufwächst.

In Figur 5c ist ein weiteres Ausführungsbeispiel mit mehreren Mikrokapseln 8c dargestellt. Die Mikrokapseln 8c sind in eine Festkörperschicht 5 eingebettet. Zur Herstellung des in Figur 5c gezeigten Aufbaus wird zunächst ein flüssiges Medium 2 mit darin dispergierten magnetischen Partikeln 1 gemäß einem Standard-Verfahren zur Mikroverkapselung verkapselt, z.B. mittels Koazervation. Dabei werden üblicherweise Mikrokapseln hergestellt, die eine ursprüngliche Hülle 3 mit relativ geringer Dicke aufweisen. Diese Mikrokapseln werden so in eine Festkörperschicht 5 eingebettet, dass die Mikrokapseln durch das Einbetten jeweils eine Wand 6 mit großer Wanddicke erhalten. Die Wand 6 der jeweils resultierenden Mikrokapsel 8c setzt sich zusammen aus der ursprünglichen Hülle 3 und aus dem Abschnitt 7 der Festkörperschicht 5, der die Hülle 3 der jeweiligen Mikrokapsel unmittelbar umgibt. Die Festkörperschicht 5 stellt dabei eine gemeinsame Schutzschicht 5 für eine Vielzahl von Mikrokapseln 8c bereit. Als Festkörperschicht 5 eignet sich z.B. eine Polymerschicht. Die (ursprünglichen) Mikrokapseln werden dabei vor der Polymerisation in das (flüssige) Polymer eingebracht und anschließend durch Polymerisation in der Polymerschicht fixiert.

## Patentansprüche

1. Sicherheitsmerkmal zur Absicherung von Wertdokumenten mit einer Vielzahl von Mikrokapseln (8, 8a, 8b, 8c), die jeweils eine Wand (6) aufweisen und in denen jeweils ein flüssiges Medium (2) enthalten ist, in dem mehrere magnetische Partikel (1, 1a, 1b) verteilt sind, die in dem flüssigen Medium (2) beweglich sind und deren Anordnung innerhalb der Mikrokapsel (8, 8a, 8b, 8c) durch Einwirkung eines Magnetfelds veränderbar ist, **dadurch gekennzeichnet, dass** die magnetischen Partikel (1, 1a, 1b) dazu ausgebildet sind, sich innerhalb der Mikrokapsel (8, 8a, 8b, 8c) so anzuordnen, dass sie eine lichtbeugende regelmäßige Struktur (9) bilden.

2. Sicherheitsmerkmal nach Anspruch 1, **dadurch gekennzeichnet, dass** die Mikrokapseln (8, 8a, 8b, 8c) durch die Wand (6) jeweils so stabilisiert sind, dass sie als Bestandteil des Sicherheitsmerkmals zur Absicherung von Wertdokumenten verwendet werden können.

3. Sicherheitsmerkmal nach einem der Ansprüche 1 bis 2, **dadurch gekennzeichnet, dass** die Mikrokapseln (8, 8a, 8b, 8c) durch eine individuell aufgebrachte Wand (6) so stabilisiert sind, dass sie durch ein Druckverfahren auf das Wertdokument aufgebracht werden können.

4. Sicherheitsmerkmal nach einem der Ansprüche 1 bis 3, **dadurch gekennzeichnet, dass** die Wand der Mikrokapseln (8, 8a, 8b, 8c) jeweils eine Wanddicke (w) von mindestens 10% des größten Durchmessers der Mikrokapsel (8, 8a, 8b, 8c) aufweist, vorzugsweise mindestens 20%.

5. Sicherheitsmerkmal nach einem der Ansprüche 1 bis 4, **dadurch gekennzeichnet, dass** die Wand (6) der Mikrokapseln (8, 8a, 8b, 8c) jeweils eine Wanddicke (w) aufweist, die mindestens 2 µm beträgt, vorzugsweise mindestens 4 µm.

6. Sicherheitsmerkmal nach einem der Ansprüche 1 bis 5, **dadurch gekennzeichnet, dass** die Mikrokapseln (8, 8a, 8b, 8c) jeweils einen Durchmesser von höchstens 20 µm aufweist, bevorzugt höchstens 10 µm.

7. Sicherheitsmerkmal nach einem der Ansprüche 1 bis 6, **dadurch gekennzeichnet, dass** die magnetischen Partikel (1, 1a, 1b) als superparamagnetische Partikel ausgebildet sind oder dass die magnetischen Partikel (1, 1a, 1b) als ferro- oder ferrimagnetische Partikel ausgebildet sind, deren remanente Magnetisierung maximal 20 % ihrer Sättigungsmagnetisierung beträgt, wobei die magnetischen Partikel (1, 1a, 1b) vorzugsweise eine funktionalisierte Partikeloberfläche aufweisen.

8. Sicherheitsmerkmal nach einem der Ansprüche 1 bis 7, **dadurch gekennzeichnet, dass** die Wand (6) der Mikrokapseln (8a) jeweils aus einer Hülle (3) besteht, die bei der Herstellung der Mikrokapsel (8a) erzeugt wird.

9. Sicherheitsmerkmal nach einem der Ansprüche 1 bis 7, **dadurch gekennzeichnet, dass** die Wand (6) der Mikrokapseln (8b, 8c) jeweils aus einer Hülle (3) der Mikrokapsel (8b, 8c) besteht, die bei der Herstellung der Mikrokapsel (8b, 8c) erzeugt wird, und aus einer Schutzschicht (4, 7), von der die Hülle (3) vollständig umgeben ist.

10. Sicherheitsmerkmal nach Anspruch 9, **dadurch gekennzeichnet, dass** die Schutzschicht eine individuelle Schutzschicht (4) ist, die individuell auf die Mikrokapsel (8b) aufgebracht ist, wobei die individuelle Schutzschicht (4) der Mikrokapsel (8b) vorzugsweise Polymer oder Silika oder eine Mischung aus Polymer und Silika aufweist.

11. Sicherheitsmerkmal nach Anspruch 9, **dadurch gekennzeichnet, dass** die Schutzschicht (7) der Mikrokapsel (8c) durch eine Festkörperschicht (5), insbesondere durch eine Polymerschicht, bereitgestellt wird, in die mehrere Mikrokapseln (8c) eingebettet sind und die jeweils zusammen mit der Hülle (3) der Mikrokapsel (8c) die Wand (6) der Mikrokapsel (8c) bildet.

12. Sicherheitselement, das ein Sicherheitsmerkmal nach einem der Ansprüche 1 bis 11 aufweist.

13. Wertdokument oder Sicherheitspapier, das ein Sicherheitsmerkmal nach einem der Ansprüche 1 bis 11 und/ oder ein Sicherheitselement nach Anspruch 12 aufweist.

14. Verfahren zur Herstellung eines Sicherheitsmerkmals nach einem der Ansprüche 1 bis 11, mit den Schritten:
- Verkapseln eines flüssigen Mediums (2), in dem mehrere magnetische Partikel (1, 1a, 1b) verteilt sind, in eine Vielzahl von Mikrokapseln (8, 8a, 8b, 8c), wobei die magnetische Partikel (1, 1a, 1b) in dem flüssigen Medium (2) beweglich sind und die Anordnung der magnetischen Partikel (1, 1a, 1b) innerhalb der Mikrokapseln (8, 8a, 8b, 8c) durch Einwirkung eines Magnetfelds veränderbar ist und wobei die magnetischen Partikel (1, 1a, 1b) dazu ausgebildet sind, sich innerhalb der Mikrokapseln (8, 8a, 8b, 8c) so anzuordnen, dass sie eine lichtbeugende regelmäßige Struktur (9) bilden,
- Umgeben der Mikrokapseln (8, 8a, 8b, 8c) mit einer Wand (6).

15. Verfahren nach Anspruch 14, **dadurch gekennzeichnet, dass** die Mikrokapseln (8, 8a, 8b, 8c) durch das Umgeben mit der Wand (6) so stabilisiert werden, dass sie zur Absicherung von Wertdokumenten verwendbar sind, wobei das Umgeben der Mikrokapseln (8, 8a, 8b, 8c) mit der Wand (6) vorzugsweise durchgeführt wird, bevor das Sicherheitsmerkmal mit einem abzusichernden Wertdokument verbunden wird.

## Claims

1. A security feature for securing documents of value having a plurality of microcapsules (8, 8a, 8b, 8c) which respectively have a wall (6) and in which is respectively contained a liquid medium (2) in which are distributed several magnetic particles (1, 1a, 1b) which are movable in the liquid medium (2) and whose arrangement within the microcapsule (8, 8a, 8b, 8c) is changeable by the action of a magnetic field, **characterized in that** the magnetic particles (1, 1a, 1b) are configured to arrange themselves within the microcapsule (8, 8a, 8b, 8c) such that they form a light-diffractive regular structure (9).

2. The security feature according to claim 1, **characterized in that** the microcapsules (8, 8a, 8b, 8c) are respectively stabilized by the wall (6) such that they can be used as a component of the security feature for securing documents of value.

3. The security feature according to any of claims 1 to 2, **characterized in that** the microcapsules (8, 8a, 8b, 8c) are stabilized by an individually applied wall (6) such that they can be applied by a printing process onto the document of value.

4. The security feature according to any of claims 1 to 3, **characterized in that** the wall of the microcapsules (8, 8a, 8b, 8c) respectively has a wall thickness (w) of at least 10% of the largest diameter of the microcapsule (8, 8a, 8b, 8c), preferably at least 20%.

5. The security feature according to any of claims 1 to 4, **characterized in that** the wall (6) of the microcapsules (8, 8a, 8b, 8c) respectively has a wall thickness (w) which is at least 2 µm, preferably at least 4 µm.

6. The security feature according to any of claims 1 to 5, **characterized in that** the microcapsules (8, 8a, 8b, 8c) respectively have a diameter of no more than 20 µm, preferably no more than 10 µm.

7. The security feature according to any of claims 1 to 6, **characterized in that** the magnetic particles (1, 1a, 1b) are configured as superparamagnetic particles or that the magnetic particles (1, 1a, 1b) are configured as ferro- or ferrimagnetic particles, the remanent magnetization of which is no more than 20% of their saturation magnetization, whereby the magnetic particles (1, 1a, 1b) preferably have a functionalized particle surface.

8. The security feature according to any of claims 1 to 7, **characterized in that** the wall (6) of the microcapsules (8a) respectively consists of a shell (3), which is produced upon the manufacturing of the microcapsule (8a).

9. The security feature according to any of claims 1 to 7, **characterized in that** the wall (6) of the microcapsules (8b, 8c) respectively consists of a shell (3) of the microcapsule (8b, 8c), which is produced upon the manufacturing of the microcapsule (8b, 8c), and of a protection layer (4, 7) by which the shell (3) is completely surrounded.

10. The security feature according to claim 9, **characterized in that** the protection layer is an individual protection layer (4), which is individually applied onto the microcapsule (8b), whereby the individual protection layer (4) of the microcapsule (8b) preferably has polymer or silica or a mixture of polymer and silica.

11. The security feature according to claim 9, **characterized in that** the protection layer (7) of the microcapsule (8c) is provided through a solid-state layer (5), in particular through a polymer layer, in which several microcapsules (8c) are embedded and which respectively together with the shell (3) of the microcapsule (8c) forms the wall (6) of the microcapsule (8c).

12. A security element which has a security feature according to any of claims 1 to 11.

13. A document of value or security paper, which has a security feature according to any of claims 1 to 11 and/or a security element according to claim 12.

14. Method for manufacturing a security feature according to any of claims 1 to 11, with the steps:
- encapsulating a liquid medium (2), in which are distributed several magnetic particles (1, 1a, 1b), in a plurality of microcapsules (8, 8a, 8b, 8c), wherein the magnetic particles (1, 1a, 1b) in the liquid medium (2) are movable and the arrangement of the magnetic particles (1, 1a, 1b) within the microcapsules (8, 8a, 8b, 8c) is changeable by the action of a magnetic field and wherein the magnetic particles (1, 1a, 1b) are configured to arrange themselves within the microcapsules (8, 8a, 8b, 8c) such that they form a light-diffractive regular structure (9),
- surrounding the microcapsules (8, 8a, 8b, 8c) with a wall (6).

15. The method according to claim 14, **characterized in that** the microcapsules (8, 8a, 8b, 8c) are stabilized by the surrounding with the wall (6) such that they can be used for securing documents of value, whereby the surrounding of the microcapsules (8, 8a, 8b, 8c) with the wall (6) is preferably carried out before the security feature is connected with a document of value to be secured.

## Revendications

1. Caractéristique de sécurité destinée à la protection de documents de valeur, comprenant une multitude de microcapsules (8, 8a, 8b, 8c) qui présentent respectivement une paroi (6) et dans lesquelles est respectivement contenu un médium liquide (2) dans lequel sont réparties plusieurs particules magnétiques (1, 1a, 1 b) qui sont mobiles dans le médium liquide (2) et dont la disposition est modifiable à l'intérieur de la microcapsule (8, 8a, 8b, 8c) par action d'un champ magnétique, **caractérisé en ce que** les particules magnétiques (1, 1a, 1b) sont conçues de manière à se disposer de telle sorte à l'intérieur de la microcapsule (8, 8a, 8b, 8c) qu'elles constituent une structure (9) régulière diffractant la lumière.

2. Caractéristique de sécurité selon la revendication 1, **caractérisée en ce que** les microcapsules (8, 8a, 8b, 8c) sont respectivement stabilisées de telle sorte par la paroi (6) qu'elles peuvent être utilisées en tant que composant de la caractéristique de sécurité pour la protection de documents de valeur.

3. Caractéristique de sécurité selon une des revendications de 1 à 2, **caractérisée en ce que** les microcapsules (8, 8a, 8b, 8c) sont stabilisées de telle sorte par une paroi (6) appliquée individuellement qu'elles peuvent être appliquées par un processus d'impression sur le document.

4. Caractéristique de sécurité selon une des revendications de 1 à 3, **caractérisée en ce que** la paroi des microcapsules (8, 8a, 8b, 8c) présente respectivement une épaisseur de paroi (w) d'au moins 10 % du plus grand diamètre des microcapsules (8, 8a, 8b, 8c), de préférence au moins 20 %.

5. Caractéristique de sécurité selon une des revendications de 1 à 4, **caractérisée en ce que** la paroi (6) des microcapsules (8, 8a, 8b, 8c) présente respectivement une épaisseur de paroi (w) qui est d'au moins 2 µm, de préférence d'au moins 4 µm.

6. Caractéristique de sécurité selon une des revendications de 1 à 5, **caractérisée en ce que** les microcapsules (8, 8a, 8b, 8c) présentent respectivement un diamètre d'au plus 20 µm, de préférence d'au plus 10 µm.

7. Caractéristique de sécurité selon une des revendications de 1 à 6, **caractérisée en ce que** les particules magnétiques (1, 1a, 1b) sont réalisées sous forme de particules supraparamagnétiques ou **en ce que** les particules magnétiques (1, 1a, 1b) sont réalisées sous forme de particules ferromagnétiques ou ferrimagnétiques dont l'aimantation rémanente est d'au maximum 20 % de leur aimantation de saturation, les particules magnétiques (1, 1a, 1 b) présentant de préférence une surface fonctionnalisée de particule.

8. Caractéristique de sécurité selon une des revendications de 1 à 7, **caractérisée en ce que** la paroi (6) des microcapsules (8a) consiste respectivement en une enveloppe (3) qui est générée lors de la fabrication de la microcapsule (8a).

9. Caractéristique de sécurité selon une des revendications de 1 à 7, **caractérisée en ce que** la paroi (6) des microcapsules (8b, 8c) consiste respectivement en une enveloppe (3) de la microcapsule (8b, 8c) qui est générée lors de la fabrication de la microcapsule (8b, 8c) et en une couche protectrice (4, 7) dont l'enveloppe (3) est entièrement enrobée.

10. Caractéristique de sécurité selon la revendication 9, **caractérisée en ce que** la couche protectrice est une couche protectrice individuelle (4) qui est appliquée individuellement sur la microcapsule (8b), la couche protectrice individuelle (4) de la microcapsule (8b) comportant de préférence du polymère ou du silice ou un mélange de polymère et silice.

11. Caractéristique de sécurité selon la revendication 9, **caractérisée en ce que** la couche protectrice (7) de la microcapsule (8c) est mise à disposition sous forme d'une couche de corps solide (5), notamment par une couche de polymère dans laquelle plusieurs microcapsules (8c) sont noyées et qui constitue respectivement conjointement avec l'enveloppe (3) de la microcapsule (8c) la paroi (6) de la microcapsule (8c).

12. Elément de sécurité qui comporte une caractéristique de sécurité selon une des revendications de 1 à 11.

13. Document de valeur ou papier de sécurité qui comporte une caractéristique de sécurité selon une des revendications de 1 à 11 et/ou un élément de sécurité la revendication 12.

14. Procédé de fabrication d'une caractéristique de sécurité selon une des revendications de 1 à 11, comprenant les étapes :
- encapsulage d'un médium liquide (2), dans lequel sont réparties plusieurs particules magnétiques (1, 1a, 1 b), dans une multitude de microcapsules (8, 8a, 8b, 8c), les particules magnétiques (1, 1a, 1 b) étant mobiles dans le médium liquide (2) et la disposition des particules magnétiques (1, 1a, 1 b) à l'intérieur des microcapsules (8, 8a, 8b, 8c) étant modifiable par action d'un champ magnétique et les particules magnétiques (1, 1a, 1 b) étant conçues de manière à se disposer de telle sorte à l'intérieur des microcapsules (8, 8a, 8b, 8c) qu'elles constituent une structure (9) régulière diffractant la lumière,
- application d'une paroi (6) enrobant les microcapsules (8, 8a, 8b, 8c).

15. Procédé selon la revendication 14, **caractérisée en ce que** les microcapsules (8, 8a, 8b, 8c) sont stabilisées de telle sorte par l'application d'une paroi (6) les enrobant qu'elles sont utilisables pour la protection de documents de valeur, l'application de la paroi (6) enrobant les microcapsules (8, 8a, 8b, 8c) étant effectuée de préférence avant que la caractéristique de sécurité est jointe à un document de valeur à protéger.
